# EUROPEAN PATENT APPLICATION

(11) **EP 4 506 114 A1**
(43) Date of publication of application: **12.02.2025**
(21) Application number: 24193071.8
(22) Date of filing: 06.08.2024
(51) Int. Cl.: B25J 9/16

(54) **CONTROL UNIT, DRIVE DEVICE, AND CONTROL METHOD**

(30) Priority: 08.08.2023 JP 2023129539
(71) Applicant: Nidec Drive Technology Corporation, Kyoto 617-0003 (JP)
(72) Inventor: TAKAGI, Daisuke, Kyoto 617-0003 (JP)
(74) Representative: Viering, Jentschura & Partner mbB Patent- und Rechtsanwälte

(57) **Abstract**

A drive device (100) includes a motor (103), a reducer (1), and a target object. The reducer (1) decelerates rotational motion output from the motor (103). The target object is operated by rotational motion output from the reducer (1). A control unit (2) controls the motor (103) based on a detection value of a sensor (50) mounted on the reducer (1).

## Description

### Technical Field

The present disclosure relates to a control unit, a drive device, and a control method.

### Background Art

There is a known drive device including a motor and a reducer that decelerates rotation of the motor (e.g., Patent Literature 1). In the drive device of Patent Literature 1, based on a temperature sensor attached to an encoder of the motor, the motor is controlled while expansion and contraction due to a temperature change of an arm is corrected.

Patent Literature 1: JP 2015-141583 A

### Summary of Invention

### Technical Problem

However, this type of drive device is provided with a reducer between the motor and the arm. Therefore, it is difficult for the temperature sensor attached to the motor to accurately detect the temperature change of the arm.

An object of the present disclosure is to provide a technology that can control a motor while accurately detecting a state of an arm in a drive device.

### Solution to Problem

A first exemplary disclosure of the present application is a control unit of a drive device including: a motor; a reducer that decelerates rotational motion output from the motor; and a target object that is operated by rotational motion output from the reducer, the control unit characterized by controlling the motor based on a detection value of a sensor mounted on the reducer.

A second exemplary disclosure of the present application is a control unit of a drive device including: a plurality of motors; a plurality of reducers that decelerate rotational motion output from the plurality of motors, respectively; and a plurality of target objects that are operated by rotational motion output from the plurality of reducers, respectively, the control unit characterized by controlling at least one motor of the plurality of motors based on a detection value of a sensor mounted on at least one reducer of the plurality of reducers.

A third exemplary disclosure of the present application is a control method of a drive device including: a motor; a reducer that decelerates rotational motion output from the motor; and a target object that is operated by rotational motion output from the reducer, the control method characterized by controlling the motor based on a detection value of a sensor mounted on the reducer.

A fourth exemplary disclosure of the present application is a control method of a drive device including: a plurality of motors; a plurality of reducers that decelerate rotational motion output from the plurality of motors, respectively; and a plurality of target objects that are operated by rotational motion output from the plurality of reducers, respectively, the control method characterized by controlling at least one motor of the plurality of motors based on a detection value of a sensor mounted on at least one reducer of the plurality of reducers.

According to the first, second, third, and fourth exemplary disclosures of the present application, the motor is controlled based on a detection value of the sensor mounted on the reducer. This can control a motor while accurately detecting a state of an arm.

The above and other elements, features, steps, characteristics and advantages of the present disclosure will become more apparent from the following detailed description of the preferred embodiments with reference to the attached drawings.

### Brief Description of Drawings

Fig. 1 is a schematic diagram of a drive device.
Fig. 2 is a view conceptually illustrating configurations of a motor, a reducer, an arm, and a control unit.
Fig. 3 is a longitudinal cross-sectional view of the reducer.
Fig. 4 is a transverse cross-sectional view of the reducer.
Fig. 5 is a partial longitudinal cross-sectional view of a flex gear near a sensor substrate.
Fig. 6 is a plan view of the sensor substrate.
Fig. 7 is a circuit diagram of a first bridge circuit of a first torque sensor.
Fig. 8 is a circuit diagram of a second bridge circuit of a second torque sensor.
Fig. 9 is a circuit diagram of a third bridge circuit of an angle sensor.
Fig. 10 is a circuit diagram of a fourth bridge circuit of the angle sensor.
Fig. 11 is a graph illustrating time changes of a measurement value of a third voltmeter of the third bridge circuit and a measurement value of a fourth voltmeter of the fourth bridge circuit.
Fig. 12 is a circuit diagram of a fifth bridge circuit of a first thrust sensor.
Fig. 13 is a circuit diagram of a sixth bridge circuit of a second thrust sensor.
Fig. 14 is a flowchart illustrating a flow of control by the control unit.
Fig. 15 is a schematic diagram of a drive device according to a first modification.

### Description of Embodiments

Hereinafter, an exemplary embodiment of the present application will be described with reference to the drawings.

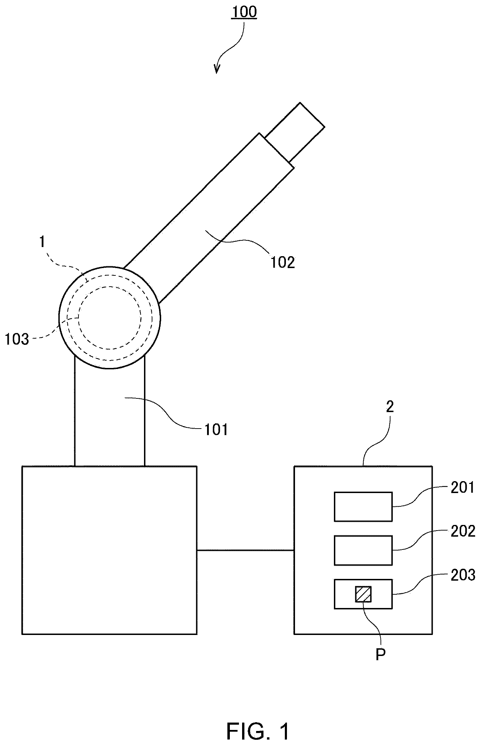

Fig. 1 is a schematic diagram of a drive device 100 including a control unit 2 according to an embodiment. The drive device 100 is a so-called industrial robot that performs work such as conveyance, processing, and assembly of components in a manufacturing line of an industrial product, for example. As illustrated in Fig. 1, the drive device 100 includes a motor 103, a reducer 1, an arm 102, and the control unit 2. The drive device 100 of the present embodiment further includes a base frame 101.

The arm 102 is pivotally supported with respect to the base frame 101. The motor 103 and the reducer 1 are incorporated in a joint between the base frame 101 and the arm 102. When the motor 103 is supplied with a drive current, rotational motion is output from the motor 103. The reducer 1 decelerates and transmits, to the arm 102, the rotational motion output from the motor 103. Due to this, the arm 102 pivots with respect to the base frame 101 at a speed after deceleration. That is, the arm 102 is a target object that is operated by the rotational motion output from the reducer 1.

The control unit 2 is a device that controls the operation of the drive device 100. The control unit 2 includes a computer or an electric circuit. As illustrated in Fig. 1, the control unit 2 includes a processor 201 such as a CPU, a memory 202 such as a RAM, and a storage unit 203 such as a hard disk drive. The storage unit 203 stores a program P for controlling the operation of the drive device 100. The control unit 2 operates in accordance with the program P.

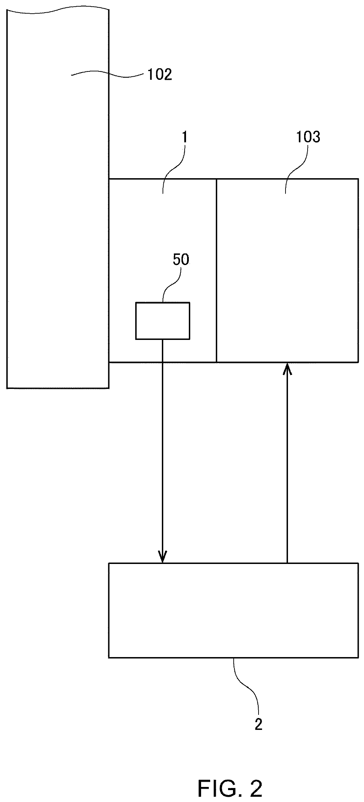

Fig. 2 is a view conceptually illustrating the configurations of the motor 103, the reducer 1, the arm 102, and the control unit 2. As illustrated in Fig. 2, the reducer 1 includes a sensor 50 that can detect a state of the arm 102. The control unit 2 is electrically connected to the sensor 50 and the motor 103. The control unit 2 controls the motor 103 based on a detection value of the sensor 50 mounted on the reducer 1. Due to this, the motor 103 can be controlled based on the sensor 50 disposed at a position closer to the arm 102 than the motor 103. Therefore, it is possible to control the motor 103 while accurately detecting the state of the arm 102. As a result, the arm 102 can be operated with high accuracy.

A detailed configuration of the sensor 50 will be described later.

Next, a detailed structure of the reducer 1 will be described.

Hereinafter, a direction parallel to a central axis 9 of the reducer 1 is called "axial", a direction orthogonal to the central axis 9 of the reducer 1 is called "radial", and a direction along an arc centered on the central axis 9 of the reducer 1 is called "circumferential". Note, however, the "parallel" described above includes substantially parallel. The "orthogonal" described above also includes substantially orthogonal.

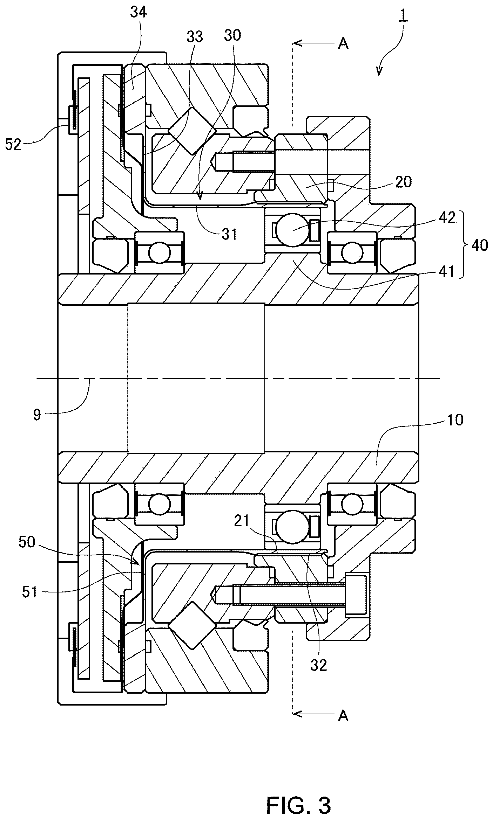

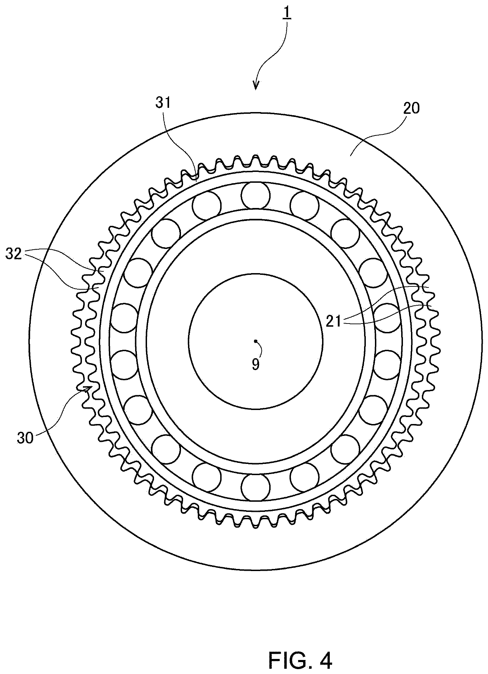

Fig. 3 is a longitudinal cross-sectional view of the reducer 1 according to an embodiment. Fig. 4 is a transverse cross-sectional view of the reducer 1 as viewed from position A-A in Fig. 2. To avoid complication of the drawings, hatching that indicates a cross section is not illustrated in Fig. 4.

The reducer 1 is a wave gear reducer. The reducer 1 decelerates the rotational motion at the first rotational speed output from the motor 103 to the second rotational speed slower than the first rotational speed. As illustrated in Figs. 3 and 4, the reducer 1 includes an input shaft 10, an internal gear 20, a flex gear 30, and a wave generator 40.

The input shaft 10 is a member that rotates at the first rotational speed before deceleration. The input shaft 10 is connected to an output shaft of the motor 103. The input shaft 10 extends in the axial direction along the central axis 9. The input shaft 10 of the present embodiment has a cylindrical shape about the central axis 9. The input shaft 10 penetrates the reducer 1 in the axial direction. The input shaft 10 may be the same member as the output shaft of the motor 103.

The internal gear 20 is a gear that rotates at the second rotational speed slower than the first rotational speed with the rotation of the input shaft 10. The internal gear 20 is fixed to the arm 102. The internal gear 20 is disposed radially outside external teeth 32 described later. Rigidity of the internal gear 20 is sufficiently higher than rigidity of a body 31 described later of the flex gear 30.

The internal gear 20 has a circular shape centered on the central axis 9. The internal gear 20 has a plurality of internal teeth 21. The plurality of internal teeth 21 protrude radially inward from an inner peripheral surface of the internal gear 20. The plurality of internal teeth 21 are arrayed at a constant pitch in the circumferential direction on the inner peripheral surface of the internal gear 20.

The flex gear 30 is a flexurally deformable annular gear. The flex gear 30 is fixed to the base frame 101. As illustrated in Figs. 3 and 4, the flex gear 30 includes the body 31, a plurality of the external teeth 32, a diaphragm 33, and a thick part 34.

The body 31 is a tubular part centered on the central axis 9. An axial one end of the body 31 is connected to the diaphragm 33. The body 31 extends from a radial inner end part of the diaphragm 33 toward the axial other side. The end part on the axial other side of the body 31 is positioned radially outside the wave generator 40 and radially inside the internal gear 20. Since the body 31 has flexibility, it can be flexurally deformed in the radial direction.

The plurality of external teeth 32 protrude radially outward from the radial outer surface of the body 31. The plurality of external teeth 32 are arranged on the radial outer surface of the axial other end of the body 31. The plurality of external teeth 32 are arrayed at a constant pitch in the circumferential direction. Some of the plurality of external teeth 32 and some the plurality of internal teeth 21 described above mesh with each other. The number of the internal teeth 21 of the internal gear 20 is slightly different from the number of the external teeth 32 of the flex gear 30.

The diaphragm 33 surrounds the central axis 9 and expands in a direction intersecting the central axis 9. The diaphragm 33 preferably extends along a plane orthogonal to the central axis 9. The diaphragm 33 expands radially outward from an axial one end of the body 31. The diaphragm 33 has an annular shape surrounding the central axis 9. Since the diaphragm 33 is thin, it can be slightly flexurally deformed.

The thick part 34 is a circular part positioned radially outside the diaphragm 33. The axial thickness of the thick part 34 is larger than the axial thickness of the diaphragm 33. The thick part 34 is fixed to the base frame 101 directly or via another member.

The wave generator 40 is a mechanism that generates periodic flexural deformation in the flex gear 30. The wave generator 40 is disposed radially inside the external teeth 32. The wave generator 40 includes a cam 41 and a flexible bearing 42. In the present embodiment, the input shaft 10 and the cam 41 are formed of a single component. However, the cam 41 may be a separate component from the input shaft 10. In that case, the cam 41 may be fixed to the input shaft 10. The cam 41 is a component that gives the flex gear 30 displacement with a period of 180°. The radial outer surface of the cam 41 has an elliptical shape about the central axis 9.

The flexible bearing 42 is a flexurally deformable bearing. The flexible bearing 42 is disposed between the radial outer surface of the cam 41 and the radial inner surface of the body 31 of the flex gear 30.

An inner ring of the flexible bearing 42 comes into contact with the radial outer surface of the cam 41. An outer ring of the flexible bearing 42 comes into contact with the radial inner surface of the body 31. Therefore, the body 31 is deformed into an elliptical shape along the radial outer surface of the cam 41. As a result, the external teeth 32 of the flex gear 30 and the internal teeth 21 of the internal gear 20 mesh with each other at two locations corresponding to both ends of the major axis of the ellipse. At other positions in the circumferential direction, the external teeth 32 and the internal teeth 21 do not mesh with each other.

When the motor 103 is driven, together with the input shaft 10, the cam 41 rotates at the first rotational speed about the central axis 9. Due to this, the major axis of the ellipse of the flex gear 30 also rotates at the first rotational speed. Then, the meshing position between the external teeth 32 and the internal teeth 21 also changes at the first rotational speed in the circumferential direction. As described above, the number of the internal teeth 21 of the internal gear 20 is slightly different from the number of the external teeth 32 of the flex gear 30. Due to this difference in the number of teeth, the meshing position between the external teeth 32 and the internal teeth 21 slightly changes in the circumferential direction every rotation of the cam 41. As a result, the internal gear 20 rotates about the central axis 9 with respect to the flex gear 30 at the second rotational speed slower than the first rotational speed.

The reducer 1 includes the sensor 50. As illustrated in Fig. 3, the sensor 50 includes a sensor substrate 51. The sensor substrate 51 is fixed to the surface of the diaphragm 33.

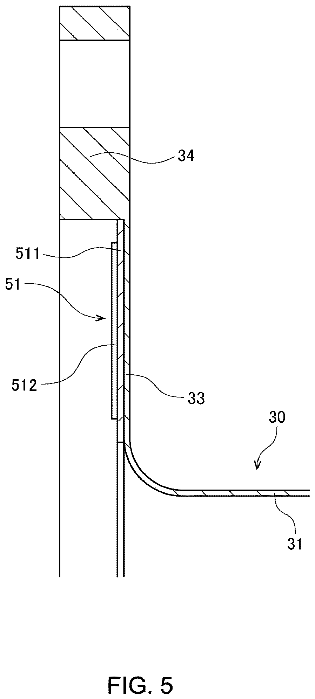

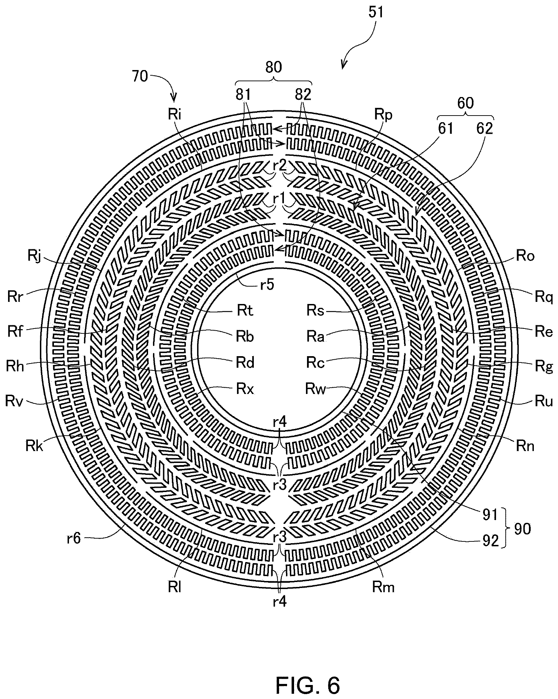

Fig. 5 is a partial longitudinal cross-sectional view of the flex gear 30 near the sensor substrate 51. Fig. 6 is a plan view of the sensor substrate 51. As illustrated in Fig. 5, the sensor substrate 51 includes an insulation layer 511 and a conductor layer 512.

The insulation layer 511 is flexibly deformable. The insulation layer 511 expands in a direction intersecting the central axis 9. The insulation layer 511 has a circular shape about the central axis 9. The insulation layer 511 is made of an insulator resin or an inorganic insulating material. The insulation layer 511 is disposed on the surface of the diaphragm 33. The conductor layer 512 is formed on the surface of the insulation layer 511. As a material of the conductor layer 512, a conductor metal is used. As a material of the conductor layer 512, for example, a copper alloy, a chromium alloy, or copper is used.

The conductor layer 512 includes a torque sensor 60, an angle sensor 70, a thrust sensor 80, and a temperature sensor 90. Each of the torque sensor 60, the angle sensor 70, and the thrust sensor 80 includes a strain gauge. That is, the sensor 50 includes a strain gauge mounted on the gear of the reducer 1. Due to this, as described later, various sensors can be configured by the strain gauges. As illustrated in Fig. 3, the sensor 50 includes a signal processing circuit 52. The signal processing circuit 52 is electrically connected to the torque sensor 60, the angle sensor 70, the thrust sensor 80, and the temperature sensor 90.

The torque sensor 60 is a sensor for detecting torque applied to the diaphragm 33 of the flex gear 30. That is, the torque sensor 60 is a sensor whose output signal changes in accordance with the torque applied to the flex gear 30. As illustrated in Fig. 6, the torque sensor 60 of the present embodiment includes a first torque sensor 61 and a second torque sensor 62. The second torque sensor 62 is disposed radially outward relative to the first torque sensor 61.

The first torque sensor 61 includes four strain gauges Ra, Rb, Rc, and Rd. Among the four strain gauges Ra, Rb, Rc, and Rd, the two strain gauges Ra and Rb are arranged at intervals in the circumferential direction. The two strain gauges Ra and Rb are each provided in a semicircular arc shape in a range of about 180° centered on the central axis 9. The radial distance from the central axis 9 to the strain gauge Ra and the radial distance from the central axis 9 to the strain gauge Rb are substantially the same.

Among the four strain gauges Ra, Rb, Rc, and Rd, the other two strain gauges Rc and Rd are arranged radially outside relative to the two strain gauges Ra and Rb. The two strain gauges Rc and Rd are arranged at intervals in the circumferential direction. The two strain gauges Rc and Rd are each provided in a semicircular arc shape in a range of about 180° centered on the central axis 9. The radial distance from the central axis 9 to the strain gauge Rc and the radial distance from the central axis 9 to the strain gauge Rd are substantially the same.

The two strain gauges Ra and Rc and the two strain gauges Rb and Rd are arranged concentrically and line-symmetrically.

As illustrated in Fig. 6, each of the strain gauges Ra, Rb, Rc, and Rd is a pattern extending circumferentially while being bent in a zigzag manner. Each of the strain gauges Ra, Rb, Rc, and Rd has a plurality of resistance lines r1 circumferentially arrayed and substantially parallel to one another. Each of the resistance lines r1 extends in a direction having both radial and circumferential components.

The resistance lines r1 of the strain gauges Ra and Rd are inclined to a circumferential one side with respect to the radial direction. The resistance lines r1 of the strain gauges Rb and Rc are inclined to the circumferential other side with respect to the radial direction. The inclination angle of the resistance line r1 with respect to the radial direction is, for example, 45°. The end parts of the resistance lines r1 circumferentially adjacent to each other are alternately connected radially inside or radially outside. Due to this, the plurality of resistance lines r1 are connected in series as a whole.

The second torque sensor 62 includes four strain gauges Re, Rf, Rg, and Rh. Among the four strain gauges Re, Rf, Rg, and Rh, the two strain gauges Re and Rf are arranged at intervals in the circumferential direction. The two strain gauges Re and Rf are each provided in a semicircular arc shape in a range of about 180° centered on the central axis 9. The radial distance from the central axis 9 to the strain gauge Re and the radial distance from the central axis 9 to the strain gauge Rf are substantially the same.

Among the four strain gauges Re, Rf, Rg, and Rh, the other two strain gauges Rg and Rh are disposed radially outside relative to the two strain gauges Re and Rf. The two strain gauges Rg and Rh are arranged at intervals in the circumferential direction. The two strain gauges Rg and Rh are each provided in a semicircular arc shape in a range of about 180° centered on the central axis 9. The radial distance from the central axis 9 to the strain gauge Rg and the radial distance from the central axis 9 to the strain gauge Rh are substantially the same.

The two strain gauges Re and Rg and the two strain gauges Rf and Rh are arranged concentrically and line-symmetrically.

As illustrated in Fig. 6, each of the strain gauges Re, Rf, Rg, and Rh has a pattern extending circumferentially while being bent in a zigzag manner. Each of the strain gauges Re, Rf, Rg, and Rh has a plurality of resistance lines r2 circumferentially arrayed and substantially parallel to one another. Each of the resistance lines r2 extends in a direction having both radial and circumferential components.

The resistance lines r2 of the strain gauges Re and Rh are inclined to a circumferential one side with respect to the radial direction. The resistance lines r2 of the strain gauges Rf and Rg are inclined to the circumferential other side with respect to the radial direction. The inclination angle of the resistance line r2 with respect to the radial direction is, for example, 45°. The end parts of the resistance lines r2 circumferentially adjacent to each other are alternately connected radially inside or radially outside. Due to this, the plurality of resistance lines r2 are connected in series as a whole.

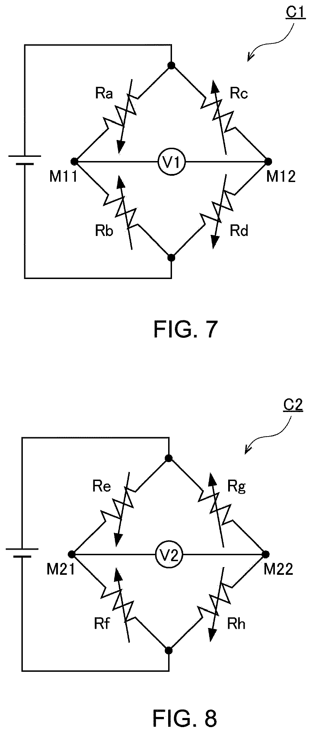

Fig. 7 is a circuit diagram of a first bridge circuit C1 including the four strain gauges Ra, Rb, Rc, and Rd of the first torque sensor 61. As illustrated in Fig. 7, the four strain gauges Ra, Rb, Rc, and Rd are connected to one another to form the first bridge circuit C1.

The strain gauge Ra and the strain gauge Rb are connected in series in this order. The strain gauge Rc and the strain gauge Rd are connected in series in this order. Between the positive pole and the negative pole of the power supply voltage, the rows of the two strain gauges Ra and Rb and the rows of the two strain gauges Rc and Rd are connected in parallel. A first voltmeter V1 is connected between a midpoint M11 of the two strain gauges Ra and Rb and a midpoint M12 of the two strain gauges Rc and Rd.

The resistance value of each of the resistance lines r1 changes in accordance with the torque applied to the region where the resistance line r1 is disposed. For example, when torque directed toward a circumferential one side about the central axis 9 is applied to the diaphragm 33, the resistance value of each of the resistance lines r1 of the two strain gauges Ra and Rd increases, and the resistance value of each of the resistance lines r1 of the other two strain gauges Rb and Rc decreases. On the other hand, when torque directed toward the circumferential other side about the central axis 9 is applied to the diaphragm 33, the resistance value of each of the resistance lines r1 of the two strain gauges Ra and Rd decreases, and the resistance value of each of the resistance lines r1 of the other two strain gauges Rb and Rc increases. In this manner, the two strain gauges Ra and Rd and the other two strain gauges Rb and Rc exhibit resistance value changes in orientations opposite to each other with respect to the torque.

When the resistance value of each of the four strain gauges Ra, Rb, Rc, and Rd changes, the potential difference between the midpoint M11 of the two strain gauges Ra and Rb and the midpoint M12 of the two strain gauges Rc and Rd changes, and therefore the measurement value of the first voltmeter V1 also changes. The signal processing circuit 52 detects the orientation and magnitude of the torque applied to the diaphragm 33 based on the measurement value of this first voltmeter V1.

Fig. 8 is a circuit diagram of a second bridge circuit C2 including the four strain gauges Re, Rf, Rg, and Rh of the second torque sensor 62. As illustrated in Fig. 8, the four strain gauges Re, Rf, Rg, and Rh are connected to one another to form the second bridge circuit C2.

The strain gauge Re and the strain gauge Rf are connected in series in this order. The strain gauge Rg and the strain gauge Rh are connected in series in this order. Between the positive pole and the negative pole of the power supply voltage, the rows of the two strain gauges Re and Rf and the rows of the two strain gauges Rg and Rh are connected in parallel. A second voltmeter V2 is connected between a midpoint M21 between the two strain gauges Re and Rf and a midpoint M22 between the two strain gauges Rg and Rh.

The resistance value of each of the resistance lines r2 changes in accordance with the torque applied to the region where the resistance line r2 is disposed. For example, when torque directed toward a circumferential one side about the central axis 9 is applied to the diaphragm 33, the resistance value of each of the resistance lines r2 of the two strain gauges Re and Rh increases, and the resistance value of each of the resistance lines r2 of the other two strain gauges Rf and Rg decreases. On the other hand, when torque directed toward the circumferential other side about the central axis 9 is applied to the diaphragm 33, the resistance value of each of the resistance lines r2 of the two strain gauges Re and Rh decreases, and the resistance value of each of the resistance lines r2 of the other two strain gauges Rf and Rg increases. In this manner, the two strain gauges Re and Rh and the other two strain gauges Rf and Rg exhibit resistance value changes in orientations opposite to each other with respect to the torque.

When the resistance value of each of the four strain gauges Re, Rf, Rg, and Rh changes, the potential difference between the midpoint M21 of the two strain gauges Re and Rf and the midpoint M22 of the two strain gauges Rg and Rh changes, and therefore the measurement value of the second voltmeter V2 also changes. The signal processing circuit 52 detects the orientation and magnitude of the torque applied to the diaphragm 33 based on the measurement value of this second voltmeter V2.

The reducer 1 of the present embodiment includes the two torque sensors 61 and 62. In the signal processing circuit 52, any one of the output signals of the two torque sensors 61 and 62 is an output signal of the torque sensor 60. With the two torque sensors 61 and 62, even when an abnormality occurs in any one of the torque sensors, the torque can be detected by the other torque sensor. When an abnormality occurs in any one of the torque sensors, the abnormality can be detected.

The angle sensor 70 is a sensor for detecting the rotation angle of the rotational motion input to the reducer 1. As illustrated in Fig. 6, the angle sensor 70 includes eight strain gauges Ri, Rj, Rk, Rl, Rm, Rn, Ro, and Rp. The eight strain gauges Ri, Rj, Rk, RI, Rm, Rn, Ro, and Rp are arranged at intervals in the circumferential direction.

Each of the eight strain gauges Ri, Rj, Rk, RI, Rm, Rn, Ro, and Rp is formed of one conductive wire. Each of the strain gauges Ri, Rj, Rk, RI, Rm, Rn, Ro, and Rp has a resistance line extending in a circular arc shape along the circumferential direction. However, in each of the strain gauges Ri, Rj, Rk, RI, Rm, Rn, Ro, and Rp, the resistance line extending in the circumferential direction may be repeatedly arranged in the radial direction. The resistance line of each of the strain gauges Ri, Rj, Rk, RI, Rm, Rn, Ro, and Rp may extend in the radial direction. In each of the strain gauges Ri, Rj, Rk, RI, Rm, Rn, Ro, and Rp, the resistance line extending in the radial direction may be repeatedly arranged in the circumferential direction.

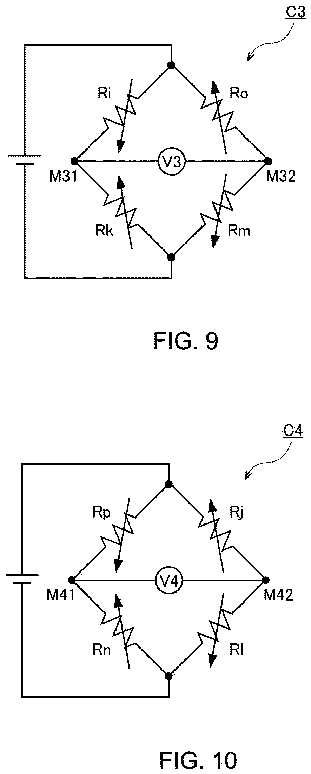

Among the eight strain gauges Ri, Rj, Rk, RI, Rm, Rn, Ro, and Rp, the four strain gauges Ri, Rk, Rm, and Ro not adjacent to one another are connected to one another to form a third bridge circuit C3. Fig. 9 is a circuit diagram of the third bridge circuit C3. As illustrated in Fig. 9, the strain gauge Ri and the strain gauge Rk are connected in series in this order. The strain gauge Ro and the strain gauge Rm are connected in series in this order. Between the positive pole and the negative pole of the power supply voltage, the rows of the two strain gauges Ri and Rk and the rows of the two strain gauges Ro and Rm are connected in parallel. A third voltmeter V3 is connected between a midpoint M31 between the two strain gauges Ri and Rk and a midpoint M32 between the two strain gauges Ro and Rm.

Among the eight strain gauges Ri, Rj, Rk, Rl, Rm, Rn, Ro, and Rp, the remaining four strain gauges Rj, Rl, Rn, and Rp are connected to one another to form a fourth bridge circuit C4. Fig. 10 is a circuit diagram of the fourth bridge circuit C4. As illustrated in Fig. 10, the strain gauge Rp and the strain gauge Rn are connected in series in this order. The strain gauge Rj and the strain gauge Rl are connected in series in this order. Between the positive pole and the negative pole of the power supply voltage, the rows of the two strain gauges Rp and Rn and the rows of the two strain gauges Rj and Rl are connected in parallel. A fourth voltmeter V4 is connected between a midpoint M41 of the two strain gauges Rp and Rn and a midpoint M42 of the two strain gauges Rj and Rl.

When the reducer 1 is driven, a circumferentially extending part (hereinafter called an "extension part") and a circumferentially contracting part (hereinafter called a "contraction part") are generated in the diaphragm 33 of the flex gear 30. Specifically, two extension parts and two contraction parts are alternately generated in the circumferential direction. That is, the extension part and the contraction part are alternately generated at intervals of 90° in the circumferential direction about the central axis 9. Then, a location where the extension part and the contraction part are generated rotates at the first rotational speed described above.

The resistance value of each of the eight strain gauges Ri, Rj, Rk, Rl, Rm, Rn, Ro, and Rp changes in accordance with circumferential extension and contraction of the diaphragm 33. For example, when the extension part described above overlaps a certain strain gauge, the resistance value of the strain gauge increases. When the contraction part described above overlaps a certain strain gauge, the resistance value of the strain gauge decreases.

In the example of Fig. 6, when the contraction part overlaps the strain gauges Ri and Rm, the extension part overlaps the strain gauges Rk and Ro. When the extension part overlaps the strain gauges Ri and Rm, the contraction part overlaps the strain gauges Rk and Ro. Therefore, in the third bridge circuit C3, the strain gauges Ri and Rm and the strain gauges Rk and Ro exhibit resistance value changes in opposite orientations.

In the example of Fig. 6, when the contraction part overlaps the strain gauges Rp and RI, the extension part overlaps the strain gauges Rn and Rj. When the extension part overlaps the strain gauges Rp and RI, the contraction part overlaps the strain gauges Rn and Rj. Therefore, in the fourth bridge circuit C4, the strain gauges Rp and RI and the strain gauges Rn and Rj exhibit resistance value changes in opposite orientations.

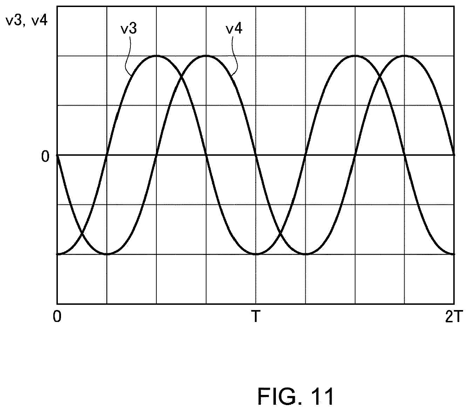

Fig. 11 is a graph illustrating time changes of a measurement value v3 of the third voltmeter V3 of the third bridge circuit C3 and a measurement value v4 of the fourth voltmeter V4 of the fourth bridge circuit C4. The horizontal axis of the graph of Fig. 11 indicates time. The vertical axis of the graph of Fig. 11 indicates a voltage value. When the reducer 1 is driven, measurement values v3 and v4 having sinusoidal shapes that periodically change are output from the third voltmeter V3 and the fourth voltmeter V4, respectively, as illustrated in Fig. 11. A period T of this measurement values v3 and v4 corresponds to 1/2 times the period of the first rotational speed. An orientation of the rotational motion to be input can be determined based on whether the phase of the measurement value v4 of the fourth voltmeter V4 is advanced by 1/8 cycle (by 1/4 cycle of the measurement values v3 and v4) of the first rotational speed with respect to the phase of the measurement value v3 of the third voltmeter V3, or is delayed by 1/8 cycle (by 1/4 cycle of the measurement values v3 and v4) of the first rotational speed with respect to the phase of the measurement value v3 of the third voltmeter V3.

The signal processing circuit 52 detects the rotation angle of the rotational motion input to the reducer 1 based on the measurement value v3 of the third voltmeter V3 and the measurement value v4 of the fourth voltmeter V4. Specifically, the signal processing circuit 52 stores a function table in which a combination of the measurement value v3 of the third voltmeter V3 and the measurement value v4 of the fourth voltmeter V4 is associated with the rotation angle. The signal processing circuit 52 outputs the rotation angle by inputting the measurement values v3 and v4 to the function table.

When the reducer 1 is driven, periodic flexural deformation occurs in the flex gear 30. Therefore, the output signal of the first torque sensor 61 and the output signal of the second torque sensor 62 described above include a component reflecting the torque originally desired to be measured and an error component (ripple error) caused by the periodic flexural deformation of the flex gear 30. The ripple error changes in a sinusoidal shape in accordance with the rotation angle of the rotational motion input to the reducer 1.

Therefore, the signal processing circuit 52 calculates the above-described ripple error according to the rotation angle detected by the angle sensor 70. Thereafter, the output signals of the first torque sensor 61 and the second torque sensor 62 are corrected using the calculated ripple error. Specifically, the signal processing circuit 52 increases or decreases the output signals of the first torque sensor 61 and the second torque sensor 62 in a direction of canceling the ripple error. As a result, the signal processing circuit 52 can output more accurately the torque applied to the flex gear 30.

The signal processing circuit 52 may multiply and combine, with the output signals of the first torque sensor 61 and the second torque sensor 62, the measurement values v3 and v4 of the third voltmeter V3 and the fourth voltmeter V4 by a predetermined coefficient without calculating the rotation angle described above. This reduces processing load on calculation of the rotation angle. Therefore, the calculation speed of the signal processing circuit 52 can be improved.

The thrust sensor 80 is a sensor for detecting a thrust force applied to the flex gear 30. That is, the thrust sensor 80 is a sensor whose output signal changes in accordance with the thrust force applied to the flex gear 30. The thrust force is a force in the axial direction. As illustrated in Fig. 6, the thrust sensor 80 of the present embodiment includes a first thrust sensor 81 and a second thrust sensor 82.

The first thrust sensor 81 includes four strain gauges Rq, Rr, Rs, and Rt. Among the four strain gauges Rq, Rr, Rs, and Rt, the two strain gauges Rq and Rr are arranged radially outside the torque sensor 60. That is, the two strain gauges Rq and Rr are preferably arranged at the radial outer end part of the diaphragm 33. The two strain gauges Rq and Rr are arranged at intervals in the circumferential direction. The two strain gauges Rq and Rr are each provided in a semicircular arc shape in a range of about 180° centered on the central axis 9. The radial distance from the central axis 9 to the strain gauge Rq and the radial distance from the central axis 9 to the strain gauge Rr are substantially the same.

Among the four strain gauges Rq, Rr, Rs, and Rt, the other two strain gauges Rs and Rt are arranged radially inside the torque sensor 60. That is, the two strain gauges Rs and Rt are preferably arranged at the radial inner end part of the diaphragm 33. The two strain gauges Rs and Rt are arranged at intervals in the circumferential direction. The two strain gauges Rs and Rt are each provided in a semicircular arc shape in a range of about 180° centered on the central axis 9. The radial distance from the central axis 9 to the strain gauge Rs and the radial distance from the central axis 9 to the strain gauge Rt are substantially the same.

That is, the two strain gauges Rq and Rr and the two strain gauges Rs and Rt are arranged at intervals in the radial direction.

As illustrated in Fig. 6, each of the strain gauges Rq, Rr, Rs, and Rt is a pattern extending circumferentially while bending in a zigzag manner. Each of the strain gauges Rq, Rr, Rs, and Rt has a plurality of resistance lines r3 circumferentially arrayed and substantially parallel to one another. Each of the resistance lines r3 extends in the radial direction. The end parts of the resistance lines r3 circumferentially adjacent to each other are alternately connected radially inside or radially outside. Due to this, the plurality of resistance lines r3 are connected in series as a whole.

The second thrust sensor 82 includes four strain gauges Ru, Rv, Rw, and Rx. Among the four strain gauges Ru, Rv, Rw, and Rx, the two strain gauges Ru and Rv are arranged radially outside the strain gauges Rq and Rr described above. The two strain gauges Ru and Rv are arranged at intervals in the circumferential direction. The two strain gauges Ru and Rv are each provided in a semicircular arc shape in a range of about 180° centered on the central axis 9. The radial distance from the central axis 9 to the strain gauge Ru and the radial distance from the central axis 9 to the strain gauge Rv are substantially the same.

Among the four strain gauges Ru, Rv, Rw, and Rx, the other two strain gauges Rw and Rx are arranged radially inside the strain gauges Rs and Rt described above. The two strain gauges Rw and Rx are arranged at intervals in the circumferential direction. The two strain gauges Rw and Rx are each provided in a semicircular arc shape in a range of about 180° centered on the central axis 9. The radial distance from the central axis 9 to the strain gauge Rw and the radial distance from the central axis 9 to the strain gauge Rx are substantially the same.

That is, the two strain gauges Ru and Rv and the two strain gauges Rw and Rx are arranged at intervals in the radial direction.

As illustrated in Fig. 6, each of the strain gauges Ru, Rv, Rw, and Rx is a pattern extending circumferentially while bending in a zigzag manner. Each of the strain gauges Ru, Rv, Rw, and Rx has a plurality of resistance lines r4 circumferentially arrayed and substantially parallel to one another. Each of the resistance lines r4 extends in the radial direction. The end parts of the resistance lines r4 circumferentially adjacent to each other are alternately connected radially inside or radially outside. Due to this, the plurality of resistance lines r4 are connected in series as a whole.

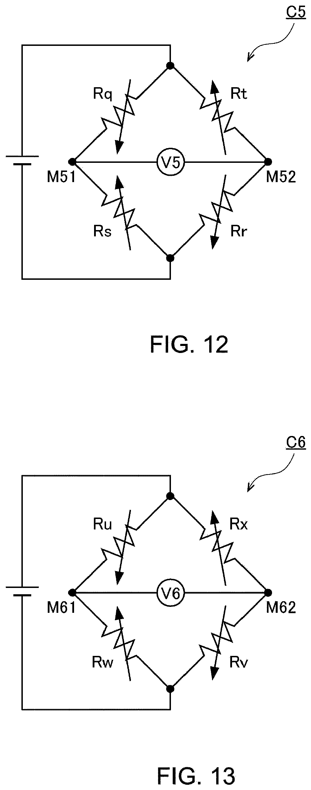

Fig. 12 is a circuit diagram of a fifth bridge circuit C5 including the four strain gauges Rq, Rr, Rs, and Rt of the first thrust sensor 81. As illustrated in Fig. 12, the four strain gauges Rq, Rr, Rs, and Rt are connected to one another to form the fifth bridge circuit C5.

The strain gauge Rq and the strain gauge Rs are connected in series in this order. The strain gauge Rt and the strain gauge Rr are connected in series in this order. Between the positive pole and the negative pole of the power supply voltage, two rows of the strain gauges Rq and Rs and two rows of the strain gauges Rt and Rr are connected in parallel. A fifth voltmeter V5 is connected between a midpoint M51 of the two strain gauges Rq and Rs and a midpoint M52 of the two strain gauges Rt and Rr.

Each of the plurality of resistance lines r3 included in the four strain gauges Rq, Rr, Rs, and Rt of the first thrust sensor 81 extends in the radial direction. For this reason, the change in the resistance value of the strain gauges Rq, Rr, Rs, and Rt due to the circumferential torque is extremely small. However, when the diaphragm 33 of the flex gear 30 is displaced in the axial direction, the resistance values of the strain gauges Rq, Rr, Rs, and Rt change.

Specifically, when the radial inner end part of the diaphragm 33 is displaced in a direction approaching the internal gear 20, the resistance values of the two outer strain gauges Rq and Rr of the four strain gauges Rq, Rr, Rs, and Rt increase, and the resistance values of the two inner strain gauges Rs and Rt decrease. On the other hand, when the radial inner end part of the diaphragm 33 is displaced in a direction away from the internal gear 20, the resistance values of the two outer strain gauges Rq and Rr of the four strain gauges Rq, Rr, Rs, and Rt decrease, and the resistance values of the two inner strain gauges Rs and Rt increase. In this manner, the two outer strain gauges Rq and Rr and the two inner strain gauges Rs and Rt exhibit resistance value changes in orientations opposite to each other with respect to the axial displacement of the diaphragm 33.

When the resistance value of each of the four strain gauges Rq, Rr, Rs, and Rt changes, the potential difference between the midpoint M51 of the two strain gauges Rq and Rs and the midpoint M52 of the two strain gauges Rt and Rr changes, and therefore the measurement value of the fifth voltmeter V5 also changes. The signal processing circuit 52 detects the orientation and magnitude of the thrust force applied to the flex gear 30 based on the measurement value of this fifth voltmeter V5.

Fig. 13 is a circuit diagram of a sixth bridge circuit C6 including the four strain gauges Ru, Rv, Rw, and Rx of the second thrust sensor 82. As illustrated in Fig. 13, the four strain gauges Ru, Rv, Rw, and Rx are connected to one another to form the sixth bridge circuit C6.

The strain gauge Ru and the strain gauge Rw are connected in series in this order. The strain gauge Rx and the strain gauge Rv are connected in series in this order. Between the positive pole and the negative pole of the power supply voltage, the rows of the two strain gauges Ru and Rw and the rows of the two strain gauges Rx and Rv are connected in parallel. A sixth voltmeter V6 is connected between a midpoint M61 of the two strain gauges Ru and Rw and a midpoint M62 of the two strain gauges Rx and Rv.

Each of the plurality of resistance lines r4 included in the four strain gauges Ru, Rv, Rw, and Rx of the second thrust sensor 82 extends in the radial direction. For this reason, the change in the resistance value of the strain gauges Ru, Rv, Rw, and Rx due to the circumferential torque is extremely small. However, when the diaphragm 33 of the flex gear 30 is displaced in the axial direction, the resistance values of the strain gauges Ru, Rv, Rw, and Rx change.

Specifically, when the radial inner end part of the diaphragm 33 is displaced in a direction approaching the internal gear 20, the resistance values of the two outer strain gauges Ru and Rv of the four strain gauges Ru, Rv, Rw, and Rx increase, and the resistance values of the two inner strain gauges Rw and Rx decrease. On the other hand, when the radial inner end part of the diaphragm 33 is displaced in a direction away from the internal gear 20, the resistance values of the two outer strain gauges Ru and Rv of the four strain gauges Ru, Rv, Rw, and Rx decrease, and the resistance values of the two inner strain gauges Rw and Rx increase. In this manner, the two outer strain gauges Ru and Rv and the two inner strain gauges Rw and Rx exhibit resistance value changes in orientations opposite to each other with respect to the axial displacement of the diaphragm 33.

When the resistance value of each of the four strain gauges Ru, Rv, Rw, and Rx changes, the potential difference between the midpoint M61 of the two strain gauges Ru and Rw and the midpoint M62 of the two strain gauges Rx and Rv changes, and therefore the measurement value of the sixth voltmeter V6 also changes. The signal processing circuit 52 detects the orientation and magnitude of the thrust force applied to the flex gear 30 based on the measurement value of this sixth voltmeter V6.

The signal processing circuit 52 corrects the output signals of the first torque sensor 61 and the second torque sensor 62 in accordance with the thrust force detected by any one of the two thrust sensors 81 and 82. Specifically, the output signals of the first torque sensor 61 and the second torque sensor 62 are increased or decreased in a direction of canceling the influence of the axial displacement of the diaphragm 33. Due to this, the signal processing circuit 52 can output more accurately the torque applied to the flex gear 30.

The reducer 1 of the present embodiment includes the two thrust sensors 81 and 82. In the signal processing circuit 52, any one of the output signals of the two thrust sensors 81 and 82 is an output signal of the thrust sensor 80. With the two thrust sensors 81 and 82, even when an abnormality occurs in any one of the thrust sensors, the thrust force can be detected by the other thrust sensor. When an abnormality occurs in any one of the thrust sensors, the abnormality can be detected.

The temperature sensor 90 is a sensor that detects the temperature of the flex gear 30. That is, the temperature sensor 90 is a sensor whose output signal changes in accordance with the temperature of the flex gear 30. As illustrated in Fig. 6, the temperature sensor 90 of the present embodiment includes a first temperature sensor 91 and a second temperature sensor 92.

The first temperature sensor 91 has one resistance line r5. The resistance line r5 is disposed radially inside relative to the torque sensor 60. The resistance line r5 is provided in a circular arc shape in a range of about 360° centered on the central axis 9. Therefore, even when the diaphragm 33 is displaced in the circumferential direction, the radial direction, or the axial direction, the resistance value of the resistance line r5 hardly changes. Therefore, the resistance value of the resistance line r5 is predominantly changed by temperature. The signal processing circuit 52 measures the resistance value of the resistance line r5 based on the output signal from the bridge circuit including the resistance line r5 and a fixed resistance. Then, the signal processing circuit 52 detects the temperature of the flex gear 30 based on the measured resistance value.

The second temperature sensor 92 has one resistance line r6. The resistance line r6 is disposed radially outside relative to the torque sensor 60. The resistance line r6 is provided in a circular arc shape in a range of about 360° centered on the central axis 9. Therefore, even when the diaphragm 33 is displaced in the circumferential direction, the radial direction, or the axial direction, the resistance value of the resistance line r6 hardly changes. Therefore, the resistance value of the resistance line r6 is predominantly changed by temperature. The signal processing circuit 52 measures the resistance value of the resistance line r6 based on the output signal from the bridge circuit including the resistance line r6 and a fixed resistance. Then, the signal processing circuit 52 detects the temperature of the flex gear 30 based on the measured resistance value.

The signal processing circuit 52 corrects the output signals of the first torque sensor 61 and the second torque sensor 62 in accordance with the temperature detected by any one of the two temperature sensors 91 and 92. Specifically, the output signals of the first torque sensor 61 and the second torque sensor 62 are increased or decreased in a direction of canceling the influence of temperature. Due to this, the signal processing circuit 52 can output more accurately the torque applied to the flex gear 30.

The reducer 1 of the present embodiment includes the two temperature sensors 91 and 92. In the signal processing circuit 52, any one of the output signals of the two temperature sensors 91 and 92 is an output signal of the temperature sensor 90. With the two temperature sensors 91 and 92, even when an abnormality occurs in any one of the temperature sensors, the temperature of the flex gear 30 can be detected by the other temperature sensor. When an abnormality occurs in any one of the temperature sensors, the abnormality can be detected.

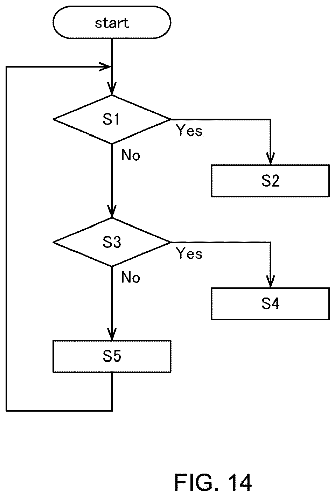

The control unit 2 controls the motor 103 based on the detection value of the sensor 50. Fig. 14 is a flowchart illustrating the flow of the control by the control unit 2.

The control unit 2 determines whether or not the difference between the output signals of the two sensors is equal to or greater than a predetermined threshold (step S1). Specifically, the control unit 2 determines whether or not the difference between the output signals of the two temperature sensors 91 and 92 is equal to or greater than a first threshold value stored in advance in the storage unit 203. The control unit 2 determines whether or not the difference between the output signals of the two torque sensors 61 and 62 is equal to or greater than a second threshold stored in advance in the storage unit 203. The control unit 2 determines whether or not the difference between the output signals of the two thrust sensors 81 and 82 is equal to or greater than a third threshold stored in advance in the storage unit 203.

Then, if the difference between the output signals of the two sensors is equal to or greater than the threshold (step S1: Yes), the control unit 2 performs alert control (step S2). The alert control is, for example, output of an alert. The output of the alert may be display of an alert on a display, lighting of a warning lamp, or sounding of a warning sound. The alert control may be that the control unit 2 stops or restricts the operation of the drive device 100. The alert control may be a case of controlling the operation of the drive device 100 without emitting information perceivable by a human.

Specifically, the control unit 2 performs alert control when the difference between the output signals of the two temperature sensors 91 and 92 becomes equal to or greater than the first threshold value. The control unit 2 performs alert control when the difference between the output signals of the two torque sensors 61 and 62 becomes equal to or greater than the second threshold value. The control unit 2 performs alert control when the difference between the output signals of the two thrust sensors 81 and 82 becomes equal to or greater than the third threshold value.

When the difference between the output signals of the two sensors becomes equal to or greater than the threshold, there is a possibility that any one of the two sensors has failed. Therefore, the control unit 2 performs the alert control described above. This enables the user of the drive device 100 to check a presence or absence of a failure or handle the failure. In some cases, the operation of the drive device 100 may be controlled without requiring the user to check an abnormality of the drive device 100.

In step S1, if the difference between the output signals of the two sensors is not equal to or greater than the threshold (step S1: No), the control unit 2 then determines whether or not the value of the output signal of the sensor 50 deviates from a predetermined allowable range (step S3). Specifically, the control unit 2 determines whether or not the value of the output signal of the temperature sensor 90 deviates from a first allowable range stored in advance in the storage unit 203. The control unit 2 determines whether or not the value of the output signal of the torque sensor 60 deviates from a second allowable range stored in advance in the storage unit 203. The control unit 2 determines whether or not the value of the output signal of the thrust sensor 80 deviates from a third allowable range stored in advance in the storage unit 203.

Then, if the value of the output signal of the sensor 50 deviates from the allowable range (step S3: Yes), the control unit 2 performs alert control (step S4). The alert control is, for example, output of an alert. The output of the alert may be display of an alert on a display, lighting of a warning lamp, or sounding of a warning sound. The alert control may be that the control unit 2 stops or restricts the operation of the drive device 100. The alert control may be a case of controlling the operation of the drive device 100 without emitting information perceivable by a human.

Specifically, the control unit 2 performs alert control when the value of the output signal of the temperature sensor 90 deviates from the first allowable range. The control unit 2 performs alert control when the value of the output signal of the torque sensor 60 deviates from the second allowable range. The control unit 2 performs alert control when the value of the output signal of the thrust sensor 80 deviates from the third allowable range.

When the value of the output signal of the temperature sensor 90 deviates from the first allowable range, it indicates that the temperature of the flex gear 30 is not normal. When the value of the output signal of the torque sensor 60 deviates from the second allowable range, it indicates that the torque applied to the flex gear 30 is not normal. When the value of the output signal of the thrust sensor 80 deviates from the third allowable range, it indicates that the thrust force applied to the flex gear 30 is not normal. Therefore, the control unit 2 performs the alert control described above. This enables the user of the drive device 100 to cope with the situation. In some cases, the operation of the drive device 100 may be controlled without requiring the user to check an abnormality of the drive device 100.

In step S3, if the value of the output signal of the sensor 50 does not deviate from the allowable range (step S3: No), the control unit 2 controls the motor 103 based on the output signal of the sensor 50 (step S5).

Specifically, the control unit 2 controls the motor 103 based on the detection signal of the temperature sensor 90. The detection signal of the temperature sensor 90 is correlated with an expansion amount or a contraction amount of the arm 102 due to a change in temperature. In particular, the temperature sensor 90 is disposed at a position closer to the arm 102 than the motor 103. Therefore, the detection signal of the temperature sensor 90 is a signal that accurately reflects the expansion amount or the contraction amount of the arm 102. Therefore, by controlling the motor 103 based on the detection signal of the temperature sensor 90, it is possible to accurately perform control in consideration of the expansion amount or the contraction amount of the arm 102 due to the change in temperature.

The control unit 2 controls the motor 103 based on the detection signal of the torque sensor 60. The detection signal of the torque sensor 60 reflects the torque applied to the flex gear 30 by swing in the rotation direction of the arm 102. In particular, the torque sensor 60 is disposed at a position closer to the arm 102 than the motor 103. Therefore, the detection signal of the torque sensor 60 is a signal that accurately reflects the swing in the rotation direction of the arm 102. Therefore, by controlling the motor 103 based on the detection signal of the torque sensor 60, it is possible to accurately perform control in consideration of the swing in the rotation direction of the arm 102.

The sensor 50 of the present embodiment is attached to the flex gear 30 of the reducer 1. The sensor 50 can also be used to detect the state of the reducer 1 itself, and can also be used to detect the state of the arm 102 as described above. Therefore, it is not necessary to separately provide a sensor for detecting the state of the reducer 1 itself and a sensor for detecting the state of the arm 102. This can reduce the number of sensors mounted on the drive device 100. The configuration in a case of mounting the sensor on the drive device 100 can be simplified.

While the embodiment of the present disclosure has been described above, the present disclosure is not limited to the above embodiment. Hereinafter, various modifications will be described focusing on differences from the embodiment described above.

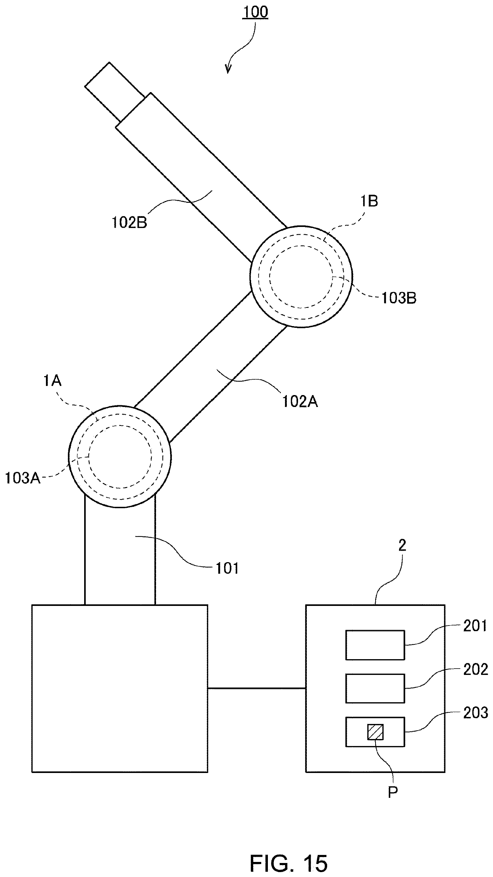

Fig. 15 is a schematic diagram of the drive device 100 according to the first modification. As illustrated in Fig. 15, the drive device 100 may include a plurality of motors, a plurality of reducers that decelerate rotational motion output from the plurality of motors, respectively, and a plurality of target objects that are operated by rotational motion output from the plurality of reducers, respectively. In the example of Fig. 15, the drive device 100 includes two motors 103A and 103B, two reducers 1A and 1B that decelerate rotational motion output from the two motors 103A and 103B, respectively, and two arms 102A and 102B that are operated by rotational motion output from the two reducers 1A and 1B, respectively.

The arm 102A is pivotally supported with respect to the base frame 101. The motor 103A and the reducer 1A are incorporated in a first joint between the base frame 101 and the arm 102A. When the motor 103A is supplied with a drive current, rotational motion is output from the motor 103A. The reducer 1A decelerates and transmits, to the arm 102A, the rotational motion output from the motor 103A. Due to this, the arm 102A pivots with respect to the base frame 101 at a speed after deceleration. That is, the arm 102A is a target object that is operated by the rotational motion output from the reducer 1A.

The arm 102B is pivotally supported with respect to the arm 102A. The motor 103B and the reducer 1B are incorporated in a second joint between the arm 102A and the arm 102B. When the motor 103B is supplied with a drive current, rotational motion is output from the motor 103B. The reducer 1B decelerates and transmits, to the arm 102B, the rotational motion output from the motor 103B. Due to this, the arm 102B pivots with respect to the arm 102A at a speed after deceleration. That is, the arm 102B is a target object that is operated by the rotational motion output from the reducer 1B.

In this case, the control unit 2 may control the motor 103A of the first joint based on a detection value of the sensor 50 mounted on the reducer 1B of the second joint. This can control the motor 103A of the first joint in consideration of the swing in the rotation direction, the vibration in the axial direction, the expansion amount, or the contraction amount of the arm 102B, which is the target object positioned on the most tip end side. Due to this, the position of the tip end of the arm 102B can be controlled with higher accuracy.

The control unit 2 may control the motor 103A of the first joint based on detection values of both the sensor 50 mounted on the reducer 1A of the first joint and the sensor 50 mounted on the reducer 1B of the second joint.

Thus, the control unit 2 may control at least one motor 103 of the plurality of motors 103 based on a detection value of the sensor 50 mounted on at least one reducer 1 of the plurality of reducers 1.

In the above embodiment, one drive device 100 includes one control unit 2. However, the control unit 2 may be a system that integrally controls a plurality of the drive devices 100.

In the above embodiment, the sensor 50 includes the torque sensor 60, the angle sensor 70, the thrust sensor 80, and the temperature sensor 90. However, the sensor 50 may include only some of the torque sensor 60, the angle sensor 70, the thrust sensor 80, and the temperature sensor 90.

In the above embodiment, the torque sensor 60 includes the first torque sensor 61 and the second torque sensor 62. However, the torque sensor 60 may be only any one of the first torque sensor 61 and the second torque sensor 62.

In the above embodiment, the thrust sensor 80 includes the first thrust sensor 81 and the second thrust sensor 82. However, the thrust sensor 80 may be only any one of the first thrust sensor 81 and the second thrust sensor 82.

In the above embodiment, the temperature sensor 90 includes the first temperature sensor 91 and the second temperature sensor 92. However, the temperature sensor 90 may be only any one of the first temperature sensor 91 and the second temperature sensor 92.

In the above embodiment, the sensor 50 is attached to the flex gear 30. However, the sensor 50 is attached to the internal gear 20 in place of the flex gear 30.

In the reducer 1 of the above embodiment, the flex gear 30 is fixed to the base frame 101, and the internal gear 20 rotates at the second rotational speed after deceleration. However, the internal gear 20 may be fixed to the base frame 101, and the flex gear 30 may rotate at the second rotational speed after deceleration.

The flex gear 30 of the above embodiment is a so-called "hat type" gear in which the diaphragm 33 expands radially outward from the body 31. However, the flex gear 30 may be a so-called "cup type" gear in which the diaphragm 33 expands radially inward from the body 31.

In the above embodiment, the drive device 100 is an industrial robot having an arm. However, the drive device 100 may be another device such as an assist suit or an automatic guided vehicle.

In addition, detailed configurations of the motor, the reducer, the drive device, and the control unit may be appropriately changed without departing from the gist of the present disclosure. The elements appearing in the above embodiment and modifications may be appropriately combined as long as no contradiction occurs.

The present technology can have the following configurations.
(1) A control unit of a drive device including: a motor; a reducer that decelerates rotational motion output from the motor; and a target object that is operated by rotational motion output from the reducer, the control unit characterized by controlling the motor based on a detection value of a sensor mounted on the reducer.
(2) A control unit of a drive device including: a plurality of motors; a plurality of reducers that decelerate rotational motion output from the plurality of motors, respectively; and a plurality of target objects that are operated by rotational motion output from the plurality of reducers, respectively, the control unit characterized by controlling at least one motor of the plurality of motors based on a detection value of a sensor mounted on at least one reducer of the plurality of reducers.
(3) The control unit according to (1) or (2), characterized in that the sensor includes a strain gauge mounted on a gear of the reducer.
(4) The control unit according to any one of (1) to (3), characterized in that the sensor is a temperature sensor in which an output signal changes in accordance with a temperature of the gear.
(5) The control unit according to (4), characterized in that the reducer includes two of the temperature sensors, and the control unit performs alert control when a difference between output signals of the two temperature sensors is equal to or greater than a predetermined threshold.
(6) The control unit according to (4) or (5), characterized in that alert control is performed when a value of an output signal of the temperature sensor deviates from a predetermined allowable range.
(7) The control unit according to any one of (1) to (3), characterized in that the sensor is a torque sensor in which an output signal changes in accordance with torque applied to the gear.
(8) The control unit according to (7), characterized in that the reducer includes two of the torque sensors, and the control unit performs alert control when a difference between output signals of the two torque sensors is equal to or greater than a predetermined threshold.
(9) The control unit according to (7) or (8), characterized in that alert control is performed when a value of an output signal of the torque sensor deviates from a predetermined allowable range.
(10) The control unit according to any one of (1) to (3), characterized in that the sensor is a thrust sensor in which an output signal changes in accordance with a thrust force applied to the gear.
(11) The control unit according to (10), characterized in that the reducer includes two of the thrust sensors, and the control unit performs alert control when a difference between output signals of the two thrust sensors is equal to or greater than a predetermined threshold.
(12) The control unit according to (10) or (11), characterized in that alert control is performed when a value of an output signal of the thrust sensor deviates from a predetermined allowable range.
(13) A drive device including: the control unit according to any one of (1) to (12); the motor; the reducer; and the target object.
(14) A control method of a drive device including: a motor; a reducer that decelerates rotational motion output from the motor; and a target object that is operated by rotational motion output from the reducer, the control method characterized by controlling the motor based on a detection value of a sensor mounted on the reducer.
(15) A control method of a drive device including: a plurality of motors; a plurality of reducers that decelerate rotational motion output from the plurality of motors, respectively; and a plurality of target objects that are operated by rotational motion output from the plurality of reducers, respectively, the control method characterized by controlling at least one motor of the plurality of motors based on a detection value of a sensor mounted on at least one reducer of the plurality of reducers.

The present disclosure can be used for, for example, a control unit, a drive device, and a control method.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope of the present disclosure. The scope of the present disclosure, therefore, is to be determined solely by the following claims.

## Claims

1. A control unit (2) of a drive device (100) comprising:
a motor (103);
a reducer (1) that decelerates rotational motion output from the motor (103); and
a target object that is operated by rotational motion output from the reducer (1),
wherein the control unit (2) is configured to
control the motor (103) based on a detection value of a sensor (50) mounted on the reducer (1).

2. The control unit (2) according to claim 1, wherein
the sensor (50) includes a strain gauge mounted on a gear (30) of the reducer (1).

3. The control unit (2) according to claim 1 or 2, wherein
the sensor (50) includes or is a temperature sensor (90) in which an output signal changes in accordance with a temperature of the gear (30).

4. The control unit (2) according to claim 3, wherein
the reducer (1) includes two of the temperature sensors (90), and
the control unit (2) is configured to perform alert control when a difference between output signals of the two temperature sensors (90) is equal to or greater than a predetermined threshold.

5. The control unit (2) according to claim 3,
configured to perform alert control when a value of an output signal of the temperature sensor (90) deviates from a predetermined allowable range.

6. The control unit (2) according to any one of claims 1 to 5,
wherein the sensor (50) includes or is a torque sensor (60) in which an output signal changes in accordance with torque applied to the gear (30).

7. The control unit (2) according to claim 6,
wherein the reducer (1) includes two of the torque sensors (60), and
the control unit (2) is configured to perform alert control when a difference between output signals of the two torque sensors (60) is equal to or greater than a predetermined threshold.

8. The control unit (2) according to claim 6,
configured to perform alert control when a value of an output signal of the torque sensor (60) deviates from a predetermined allowable range.

9. The control unit (2) according to any one of claims 1 to 8,
wherein the sensor (50) includes or is a thrust sensor (80) in which an output signal changes in accordance with a thrust force applied to the gear (30).

10. The control unit (2) according to claim 9,
wherein the reducer (1) includes two of the thrust sensors (80), and
the control unit (2) is configured to perform alert control when a difference between output signals of the two thrust sensors (80) is equal to or greater than a predetermined threshold.

11. The control unit (2) according to claim 9,
configured to perform alert control when a value of an output signal of the thrust sensor (80) deviates from a predetermined allowable range.

12. The control unit (2) of a drive device (100) according to any one of claims 1 to 11 comprising:
a plurality of the motors (103);
a plurality of the reducers (1) that are configured to decelerate rotational motion output from the plurality of motors (103), respectively; and
a plurality of the target objects that are operated by rotational motion output from the plurality of reducers (1), respectively,
wherein the control unit (2) is configured to control at least one motor (103) of the plurality of motors (103) based on a detection value of a sensor (50) mounted on at least one reducer (1) of the plurality of reducers (1).

13. A drive device (100) comprising:
the control unit (2) according to any one of claims 1 to 12;
the motor (103);
the reducer (1); and
the target object.

14. A control method of a drive device (100) comprising:
a motor (103);
a reducer (1) that decelerates rotational motion output from the motor (103); and
a target object that is operated by rotational motion output from the reducer (1), the control method
controlling the motor (103) based on a detection value of a sensor (50) mounted on the reducer (1).

15. The control method of claim 14, the drive device (100) comprising:
a plurality of the motors (103);
a plurality of the reducers (1) that decelerate rotational motion output from the plurality of motors (103), respectively; and
a plurality of the target objects that are operated by rotational motion output from the plurality of reducers (1), respectively, the control method
controlling at least one motor (103) of the plurality of motors (103) based on a detection value of a sensor (50) mounted on at least one reducer (1) of the plurality of reducers (1).
